(19) Europäisches Patentamt
European Patent Office
Office européen des brevets

(11) Publication number: **0 040 079**
**B1**

(12) **EUROPEAN PATENT SPECIFICATION**

(45) Date of publication of patent specification: **03.07.85**

(51) Int. Cl.$^4$: **C 09 J 3/12,** C 09 J 3/14

(21) Application number: **81302075.7**

(22) Date of filing: **11.05.81**

# (54) Polyisoprene toughened adhesive composition.

(30) Priority: **09.05.80 IE 964/80**

(43) Date of publication of application:
**18.11.81 Bulletin 81/46**

(45) Publication of the grant of the patent:
**03.07.85 Bulletin 85/27**

(84) *Designated Contracting States:*
**BE DE FR GB IT**

(56) References cited:
**US-A-4 126 504**

(73) Proprietor: **LOCTITE CORPORATION**
**705 North Mountain Road**
**Newington, Connecticut 06111 (US)**

(72) Inventor: **Charnock, Ronald Scott**
**10 The Willows Castletown**
**Cleridge, County Kildare (IE)**

(74) Representative: **Rushton, Ronald et al**
***SOMMERVILLE & RUSHTON 11 Holywell Hill***
**St. Albans Hertfordshire AL1 1EZ (GB)**

**EP 0 040 079 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a polyisoprene toughened adhesive composition.

Background of the Invention

Disclosed in the prior art are adhesive compositions based on solutions of elastomeric polymers in polymerizable vinyl monomers. The compositions usually exhibit reasonably good storage stability and cure rapidly to strong, tough bonds. The compositions cure in the presence of air at room temperature, usually with the aid of various polymerization catalysts; e.g., free-radical generators, initiators, promotors, and accelerators.

Examples of such adhesive compositions can be found in United States Patent Nos. 3,810,407, 3,962,372, 4,112,013, 4,118,436, 3,994,764, 3,832,274, and 4,138,449. Adhesive compositions formulated from these patents have several shortcomings which make them ineffective in applications which involve extreme environmental conditions.

One major disadvantage is their inability to maintain their structural properties such as tensile shear strength, T-peel and impact after significant exposure to high temperature aging. The chlorosulfonated polyethylene, polychloroprene and polyurethane rubber based adhesive compositions are limited, with respect to their maximum useful service, to temperatures less than 110°C. All of these adhesives require the addition of reasonable large amounts of epoxy resins to improve high temperature resistance. However, high temperature improvements in this manner are not always substantial enough to meet the requirements of many high temperature applications, and often are merely temporary.

A particular disadvantage of the poly(butadiene) based adhesive compositions is that they are soluble in relatively few monomers. Recent legislation regarding hazardous organic solvents has focused on the need to replace high volatile monomers with low volatility, high boiling-point monomers. The prior art rubbers (elastomers) are generally not sufficiently soluble in low volatility methyl methacrylate monomers to allow a useful product to be formulated.

It is evident that there is a need for an adhesive composition which when cured, provides excellent bond strengths and exhibits toughness and resistance to environmental conditions, particularly high temperature, for extended periods of time.

The adhesive compositions of this invention are designed to overcome these traditional problems of the prior art.

Summary of the Invention

This invention relates to fast curing, free-radical catalyzed structural adhesives, which form bonds of high tensile shear strength and high T-peel strength when cured. The adhesives described herein are generally formulated as two-component adhesives, the first component comprising a solution of polymer in at least one polymerizable monomer, in combination with an adhesion promoter and a free radical catalyst system, and the second component comprising an activator.

According to the invention, an improved composition is characterised by providing increased high temperature resistance in the cured adhesive wherein: said polymer is present at levels of 20% by weight or more of the total composition and is selected from isoprene block copolymer rubbers having a molecular weight in excess of 5,000; and said monomer is an acylate ester.

Thus, this invention relates to two-component adhesive compositions of the polymer-in-monomer type, wherein the polymer is dissolved in the monomer, along with the adhesion promoter and the free radical catalyst system. This solution serves as the first component of the adhesive composition. The second component of the composition is an activator, which is usually applied as a primer or coating to a substrate prior to bonding. The polymer-in-monomer solution can either be applied directly over the activated surface of the substrate or on another substrate to be mated with the first. These adhesive compositions are essentially 100% reactive and do not rely in any way on the loss of evaporation of organic solvents or water to cure.

One advantage of these adhesive compositions is that they exhibit excellent resistance to high temperature heat aging and do not require the addition of large amounts of expensive epoxy resins, as does the prior art. In Wolinski et al's U.S. Patent No. 4126504 there are disclosed polymerizable compositions comprising an acrylate ester monomer, an isoprene rubber, an adhesion promotor, a free radical catalyst system and an activator. However, it is to be noted, firstly, that Wolinski et al does not suggest specifically the use of isoprene block copolymer rubbers, secondly, that no polyisoprene compositions are exemplified by Wolinski et al, and, thirdly, that there is no disclosure or suggestion by Wolinski et al of the significant heat resistant characteristics that may be achieved by the use of isoprene block copolymer rubbers as in the present invention. Indeed, the Wolinski et al compositions do not display comparable heat resistant characteristics even when an epoxy resin is added thereto.

Further, the adhesive compositions retain their high tensile shear strength and high T-peel strengths after exposure to temperatures of up to 180°C for periods of a week or more. Such improvements are of particular importance in applications which involve high temperature exposure for long periods of time, e.g. automobile applications where adhesive bonded car components must withstand paint baking cycles of 150°C for periods of up to several hours.

Another object of this invention is to provide an ultraviolet curing, toughened adhesive composition which has resistance to sunlight, UV radiation, adverse weather conditions and solvents.

The invention further provides adhesive compositions that upon cure yield bonds which can withstand high impact shock and peeling forces, at room temperature as well as at temperature extremes.

The instant adhesive compositions are fast curing, easy to use compositions which exhibit excellent shelf-life stability, and are capable of bonding a wide variety of sustrates. When cured, these compositions provide excellent resistance to temperatures ranging from −40°C to 205°C, oils at elevated temperatures (including sulfur bearing types), moisture and humidity, oxidation and ozonation.

Detailed description of the Invention and its Preferred Embodiments

The polymerizable acrylate ester monomers may be monofunctional or a combination of mono- and polyfunctional monomers. Generally, the monomers are exemplified but not limited to those selected from alkyl acrylates, cycloalkyl acrylates, alkyl methacrylates, cycloalkyl methacrylates, alkoxy acrylates, alkoxy methacrylates, alkylene diacrylates and alkylene dimethacrylates. Among the preferred monofunctional monomers are methyl methacrylate, lauryl methacrylate, 2-ethyl hexyl methacrylate, ethyl methacrylate, n-butyl methacrylate, iso-butyl methacrylate and t-butyl methacrylate. The most preferred are those monomers which have high boiling points and low volatility characteristics, including such monomers as tetrahydrofurfuryl methacrylate, cyclohexyl methacrylate, isobornyl methacrylate, hydroxyethyl methacrylate and hydroxypropyl methacrylate.

The monofunctional monomers mentioned above may generally be represented by the formula:

I. 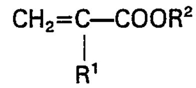

wherein $R^1$ is H, or $C_{1-4}$ alkyl, $R^2$ is H, alkyl, alkoxy, cycloalkyl, or alkylene group.

The effective range of the polymerizable acrylate ester monomer to be used in the instant compositions may vary somewhat depending on the specific properties desired, but generally 10—90% by weight of the composition desired, and preferably within the range of 15—80% by weight and most preferably 15—40% by weight. Adjustments within these ranges are easily made within the skill of the art.

It may be desirable to add a polyfunctional monomer to the composition as well. When this is done, it generally should be in the range of 10—40% by weight of the composition, depending on the specific polyfunctional monomer. Thus the polymerizable acrylate ester monomer may comprise a mixture of mono- and polyfunctional acrylates in the amounts of 90—60% to 10—40% respectively. The preferred polyfunctionals are dimethyacrylates of various glycols. These monomers are disclosed in U.S. Patent No. 3,218,305, and are of the general formula:

II. 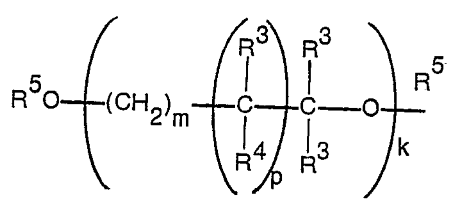

wherein $R^3$ is H, $C_{1-4}$ alkyl or hydroxyalkyl or $R^5OCH_2$—; $R^6$ is H, halogen or $C_{1-4}$ alkyl; $R^4$ is H, OH or $R^5O$—; $R^5$ is $CH_2{=}CR^6C{=}O$—; m is an integer, preferably 1 to 8; k is an integer, preferably 1 to 20; and p is 0 or 1.

Examples of some preferred glycol dimethacrylates of this formula are polyethylene glycol dimethacrylate, dipropylene glycol dimethacrylate and butylene glycol dimethacrylate to name a few.

Other suitable polymerizable acrylate ester monomers which may be employed are described in U.S. Patent No. 4,018,851 having the general formula:

III. 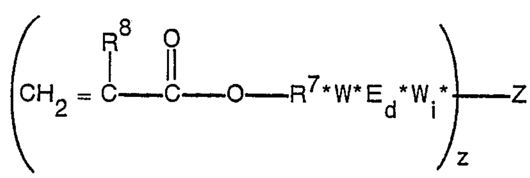

wherein $R^8$ is selected from of hydrogen, chlorine, and methyl and ethyl radicals; $R^7$ is a bivalent organic radical selected from lower alkylene of 1—8 carbon atoms, phenylene, and naphthylene; W is a polyisocyanate radical; E is an aromatic, heterocyclic or cycloaliphatic polyol or polyamine radical, preferably a diol, and more preferably a diol of a cycloaliphatic compound; d is either 1 or 0; i is 0 when d is 0, and otherwise equal to one less than the number of reactive hydrogen atoms of E; wherein Z is a (i) polymeric or copolymeric grafted alkylene ether polyol radical or (ii) polymeric or copolymeric methylene ether polyol

radical; z is an integer equal to the valency of Z; wherein an asterisk indicates a urethane (—NH—CO—O—) or ureide (—NH—CO—NH—) linkage. Z may also be a polymeric or copolymeric methylene ether polyol radical, giving a group of polymerizable monomers disclosed in U.S. Patent No. 3,993,815.

Monomers generally characterized as polyurethanes or polyureides, as disclosed in U.S. Patent No. 3,425,988 may also be used effectively. These monomers are formed from the reaction of an organic polyisocyanate and an acrylate ester having an active hydrogen in the non-acrylate portion of the ester. These monomers may be represented by the general formula:

IV. $$(A—X—CO.NH )_{n} B$$

wherein X is —O— or —$R^9$N—; $R^9$ is selected from H or lower alkyls of 1 through 7 carbon atoms; A is $CH_2{=}CR^{10}.CO.O—$; $R^{10}$ is H or $CH_3$; n is an integer from 2 to 6 inclusive; and B is a polyvalent substituted or unsubstituted alkyl, alkenyl, cycloalkyl, aryl, aralkyl, alkyloxy-alkylene, aryloxy-arylene or heterocyclic radical.

Finally, polymerizable urethane-acrylate monomers disclosed in U.S. Patent Application No. 356,679 to O'Sullivan, filed May 2, 1973, now abandoned, particularly Example 3 thereof, may be employed. Typical monomers of this type have the general formula of:

V. $$(CH_2{=}CR^{11}.CO.O.R^{13}.O.CO.NH )_{2} R^{12}$$

wherein $R^{11}$ is H, $CH_3$, $C_2H_5$ or Cl; $R^{12}$ is $C_{2-20}$ alkylene, alkenylene or cycloalkylene radical or a $C_{6-40}$ arylene, alkarylene, aralkarylene, alkyloxyalkylene or aryloxyarylene radical which may be substituted by 1—4 chlorine atoms or by 1—3 amino or mono- or di-$C_{1-3}$ alkylamino or $C_{1-3}$ alkoxy groups. $R^{13}$ is one of the following less one hydrogen atoms: (a) a $C_{1-8}$ hydroxy alkyl or aminoalkyl group, (b) a $C_{1-6}$ alkylamino-$C_{1-8}$ alkyl group; or (c) a hydroxyphenyl, an aminophenyl, a hydroxynaphthyl or an aminonaphthyl group which may be further substituted by an alkyl, alkylamino or dialkylamino group, each alkyl group in this subpart (c) containing up to 3 carbon atoms. Of these, the preferred compositions contain either monomer VI., or formula:

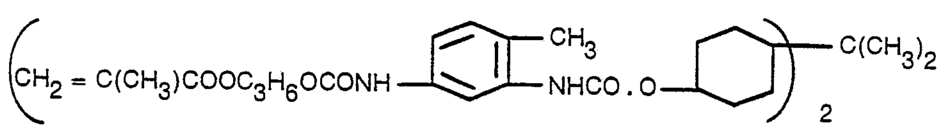

or monomer VII, of formula:

VII. 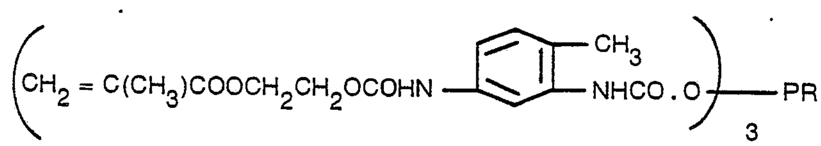

or both, (PR represents a propylene triol oligomer residue).

Mixtures of some or all of the above polymerizable acrylate ester monomers are also helpful.

The polyisoprene rubbers of the instant invention may be selected from a wide range of suitable materials. Most frequently rubbers used are either: (i) homopolymers of natural or synthetic polyisoprene; (ii) random or block copolymers of isoprene with styrene, acrylonitrile or methacrylonitrile; (iii) a copolymer of (i) or (ii) with a functional monomer selected from acrylic acid, methacrylic acid, maleic anhydride, fumaric acid, itaconic acid, acrylic acid ester and methacrylic acid ester. Also contemplated in the instant invention is a random or block copolymer of synthetic isoprene with a polymerizable acrylate or methacrylate ester monomer.

The preferred rubbers include the homopolymers of natural and synthetic polyisoprenes. Synthetic homopolymers of polyisoprene that have been found particularly useful are marketed by Shell Chemicals under the Registered Trademark Cariflex IR-305, and by Goodyear under the Registered Trademark Natsyn 2200. One grade of naturally occurring polyisoprene rubber is obtainable from the Malaysian Rubber Producers under the Registered Trademark SMR-5L. Natural polyisoprene is found in rubber producing trees such as the species Hevea Brasiliensis.

Another preferred polyisoprene rubber is the copolymer of isoprene and acrylonitrile. This rubber is sold by Polysar International S.A. under the Registered Trademark Krynac 833.

The rubbers of the instant invention are generally present in the adhesive composition in the amount of 5 to 80% by weight, and preferably 5 to 40% by weight. The average molecular weight of the rubber preferably should not be less than 5000, with an upper limit not greater than a value compatible with the solubility in the chosen monomer.

The choice of the polyisoprene rubber will, to a large degree, dictate various properties and characteristics of the adhesive composition and such choices are easily determined through general experimentation and known methods within the art. It is preferred, however, that the rubbers of the instant invention have a glass transition temperature not exceeding 15°C. In the case of a block copolymer, the glass transition temperature of the various block portions may be different. In the case of isoprene-styrene block copolymers, for example, styrene block has a glass transition temperature of −100°C and the isoprene block which has a glass transition temperature of −72°C. This demonstrates a gradation of glass transition with the block copolymer is present.

The adhesion promoters of this invention may be chosen from any of those commonly known to the person reasonably skilled in the art. Two types of promoters are preferred. The first type consists of mono- and dicarboxylic acids which are capable of copolymerizing with the acrylate ester monomer. The preferred species of these classes are methacrylic and acrylic acid. Such acids are used in proportions of 1—20% by weight of the composition, preferably in proportion of 1—15%. The second preferred type of adhesion promoter is of the well-known silane type, present in the composition in proportions of 1—10% by weight of the composition.

The free-radical initiator system consists of a free-radical initiator and an accelerator of free radical polymerization, both of which serve to effect rapid polymerization. The free-radical initiators may be of the organic peroxy or hydroperoxy type, perester of peracid type. Especially useful are the perester and peroxide type, among which t-butyl perbenzoate and cumene hydroperoxide are preferred.

Useful initiators include those that can be decomposed by the action of heat or UV light to produce free radicals. They also include other redox polymerization catalysts or any compound capable or generating free radicals. Such compounds can easily be selected from those skilled in the art. For a more detailed discussion, see U.S. Patent Nos. 3,043,820, 3,591,438, 3,616,640 and 3,832,274.

Those free-radical initiators of the photoinitiator type are preferably selected from acetophenones, benzophenones and 1- and 2-acetonaphthones. Additional initiators may be selected from (a) $C_1$ to $C_6$ alkyl diones; (b) metal carbonyls of the formula $M_x(CO)_y$ wherein M is a metal atom, x is 1 or 2, and y is an integer determined by the total valence of the metal atoms; and (c) carbonyl compounds of the general formula $R^{14}(CO)R^{15}$ wherein $R^{14}$ is an alkyl, aryl, aralkyl or alkaryl group containing up to 10 carbon atoms, and $R^{15}$ is $R^{14}$ or hydrogen; or $R^{14}$ and $R^{15}$ taken together with carbonyl group form an aromatic or heterocyclic ketone containing up to 16 carbon atoms.

The initiators are usually employed in amounts of 1% to 10% by weight of the composition.

The accelerators of free-radical polymerization of the above-mentioned catalyst system are generally used with good results in concentrations of less than 10% by weight, the preferred range being 0.1% to 0.75%. Sulfimides are the preferred group of free-radical accelerators, with the preferred species being 3-oxo-2, 3-dihydrobenz[d]isothiazole-1, 1-dioxide, commonly known as benzoic sulfimide or saccharin. Tertiary amines may also be employed as accelerators for free-radical production with the preferred amine being N,N-dimethyl-paratoluidine.

The final essential ingredient in the instant adhesive composition is an activator, which generally comprises the second part of the adhesive composition, the first part being the curable portion of the composition. These activators are intended to be applied on the surface of a substrate to be bonded, usually as a coating or a primer prior to application of the first part of the adhesive composition. However, it is also feasible for the curable portion of the composition to be put on a substrate and the activator applied over it. The preferred activators are generally aldehyde-amine condensation products, the preferred being butyraldehyde-aniline. Activators of the type are sold commercially by Uniroyal under the Registered Trademark Beutene, or by DuPont under the Registered Trademark DuPont 808. The condensation products are usually in a solvent solution such as trichlorerethane, or similar solvents, for easy application.

In another embodiment, a two-part composition is contemplated wherein each part has a polymerizable portion of the adhesive composition, and wherein one part contains the free-radical initiator and the accelerator of free-radical polymerization, and the other part contains the activator.

It is optional, but recommended, that chelators, cross-linking agents, and inhibitors be present in the adhesive composition for optimum performance. Chelators and inhibitors are effective in amounts of 0.1 to 1% by weight of the composition. Ethylenediamine tetra-acetic acid, 2,2-ethylenbis-nitril methylidyne dipyridine and the class of Beta-diketones are generally the most effective and are preferred. Cross-linking agents, optionally present in amounts from zero to 10% by weight of the composition, include such compounds as copolymerizable dimethacrylates.

The inhibitor concentration left over in the monomers from manufacture is often high enough for good stability. However, to insure maximum shelf life, the proportions mentioned above (0.1 to 1% by weight of the composition) are recommended. Of those inhibitors which have been found of adequate utility are hydroquinones, benzoquinones, naphthoquinones, phenanthraquinones, anthraquinones, and substituted compounds of any of the foregoing. Additionally, various phenols can be employed as inhibitors, the preferred one being 2,6-di-tert-butyl-4-methyl phenol.

The amount of thickness, viscosity or thixotropy desired can be varied in accordance with the particular application required. Thickeners, plasticizers, diluents, and various other agents common to the art can be employed in any reasonable manner to produce the desired characteristics.

The invention will be appreciated further from the examples to follow, which are not meant in any way to restrict the effective scope of the invention.

## EXAMPLES

### Example 1

The table below shows three adhesive formulations, two of which are of instant polyisoprene rubber-containing compositions (1 and 2), and one which does not have the rubber (control 3).

| Ingredient | Formulation No 1 | 2 | 3 (control) |
|---|---|---|---|
| | Percent by Weight | | |
| Cariflex IR-305 (polyisoprene homopolymer) | 25 | 20 | — |
| Methyl Methacrylate | 60.5 | — | 46 |
| Cyclohexyl Methacrylate | — | 65.5 | — |
| Butylene glycol dimethyacrylate | 2 | 2 | 2 |
| Methacrylic Acid | 10 | 10 | 10 |
| t-butyl perbenzoate | 2 | 2 | 2 |
| Saccharin | 0.5 | 0.5 | 0.5 |
| Elvacite 2009 (polymethylmethacrylate) | — | — | 40 |
| *Tensile Strength (psi) | 3579 | 3564 | 4723 |
| **T-Peel Strength (psi) | 26 | 33 | 6.0 |

*Measured according to ASTM D1002-64; tested at room temperature.
**Measured according to ASTM D1876-69; tested at room temperature.

Cariflex IR-305 (Registered Trademark) is an isoprene homopolymer which is a synthetic isoprene and is marketed by Shell Chemicals. Methyl methacrylate and cyclohexyl methacrylate are monofunctional polymerizable methacrylate ester monomers and butylene glycol dimethacrylate is a difunctional polymerizable acrylate ester monomer. Methacrylic acid serves as the adhesion promoter. The initiator system is represented by the perester free-radical initiator, t-butyl perbenzoate, and the accelerator of free-radical polymerization, saccharin. Elvacite 2009 is a Registered Trademark for polymethyl methacrylate which was added to the control to increase the viscosity to a satisfactory value.

Steel, grit-blasted laps were coated with the activator Beutene (Registered Trademark), an amine-aldehyde condensate in trichlorethane marketed by Uniroyal, and the polymerizable part of the adhesive composition (formulations 1, 2 and 3) was applied and the lap shear specimens allowed to fully cure at room temperature.

The lap shears were then tested at room temperature for tensile shear and T-peel strengths. As indicated in the table, the T-peel strengths of the instant polyisoprene rubber-toughened compositions are significantly better than the control composition.

### Example 2

This example is intended to demonstrate the ability of the instant polyisoprene toughened compositions to withstand high temperatures for substantial periods of time. Formulation 4 in Table II, is representative of the first part of the two-part instant composition and formulation 5 is a control, using the chlorosulphonated polyethylene (Hypalon 20) (Registered Trademark) of the prior art.

TABLE II

| Ingredients | Formulation No. 4 | Formulation No. 5 (control) |
|---|---|---|
| | Percent by Weight | |
| Krynac 833 (acrylonitrile/ isoprene copolymer) | 20 | — |
| Hypalon 20 | — | 35.0 |
| Methyl methacrylate | 65.5 | 48.25 |
| Butylene glycol dimethacrylate | 2.0 | 1.0 |
| Methacrylic acid | 10.0 | 10.0 |
| t-butyl perbenzoate | 2.0 | — |
| Saccharin | 0.5 | — |
| Cumene hydroperoxide | — | 0.5 |
| Epoxy | — | 5.0 |
| Stabilizer | — | 0.25 |

Krynac 823 (Registered Trademark) is a copolymer of acrylonitrile and isoprene and is a preferred rubber in the instant composition. As mentioned above, Hypalon (Registered Trademark) is a chlorosulphonated polyethylene rubber used in the prior art. The polymerizable acrylate ester monomers are methyl methacrylate and butylene glycol dimethacrylate. The initiator system is comprised of the perester free-radical initiator, t-butyl perbenzoate, and the sulfimide accelerator of free radical polymerizable, saccharin. Cumene hydroperoxide is a peroxy free-radical initiator.

Lap shear specimens were prepared as in Example 1, and those specimens using Formúlation 4 were primed with amine-aldehyde activator, Bentene and those specimens using Formulaion 5 were primed with DuPont 808 (Registered Trademark), an amine-aldehyde activator. Part one of the adhesive compositions (Formulations 4 and 5) was applied to the primed laps and allowed to fully cure at room temperature). The results of the testing are indicated below.

| *Tensile Shear (psi) | Heat aging — tested at room temperature<br>Formulation No. 4 | 5 |
|---|---|---|
| initial (room temp.) | 4390 | 4660 |
| after 1 hour at 180°C | 4202 | 3912 |
| after 6 hours at 180°C | 4695 | 2890 |
| after 24 hours at 180°C | 4680 | 2101 |

*tested according to ASTM D1002-64

The results above demonstrate an improvement in heat resistant properties of the instant compositions (Formulation 4) over those of the prior art (Formulation 5).

**Claims**

1. In a two-component adhesive composition of the type having a first component comprising a solution of polymer in at least one polymerizable monomer in combination with an adhesion promoter and a free radical catalyst system, and a second component comprising an activator, an improved composition characterized by providing increased high temperature resistance in the cured adhesive wherein: said polymer is present at levels of 20% by weight or more of the total composition and is selected from isoprene block copolymer rubbers having a molecular weight in excess of 5,000; and said monomer is an acrylate ester.

2. The composition according to claim 1, characterized in that the acrylate ester monomer is selected from monofunctional monomers represented by the formula:

$$CH_2{=}\underset{\displaystyle R^1}{\underset{|}{C}}{-}COOR^2$$

wherein $R^1$ is H, of $C_{1-4}$ alkyl; $R^2$ is alkyl, cycloalkyl, alkyl hydroxy, alkylene or tetrahydrofurfuryl, said monofunctional monomer preferably comprising methyl methacrylate, cyclohexyl methacrylate, tetrahydrofurfuryl methacrylate, isobornyl methacrylate, hydroxyethyl methacrylate or hydroxypropyl methacrylate.

3. The composition according to claim 1, characterized in that the acrylate ester monomer comprises a mixture of mono- and poly-functional acrylates, wherein said monofunctional acrylate preferably comprises methyl methacrylate or cyclohexyl methacrylate, and the polyfunctional crylate preferably comprises glycol dimethacrylate, and wherein the polyfunctional acrylate is present in amounts of between about 1% and 40% by weight of the total composition.

4. The composition according to any of claims 1 to 3, and characterized by one or more of the following features:

(a) the elastomeric rubber is a block copolymer of isoprene and styrene, isoprene and acrylonitrile, or isoprene and methacrylonitrile;

(b) the elastomeric rubber is polyisoprene homopolymer;

(c) the elastomeric rubber is a copolymer of isoprene and acrylic acid, methacrylic acid, maleic anhydride, fumaric acid or itaconic acid; and

(d) the elastomeric rubber is a copolymer of (a) isoprene; (b) styrene, acrylonitrile or methacrylonitrile; and (c) acrylic acid, methacrylic acid, maleic anhydride, furmaric acid or itaconic acid.

5. The adhesive composition according to any of claims 1 to 4, and characterized by one or more of the following features:

(a) the activator comprises an aldehyde-amine condensation product, preferably butyraldehyde-aniline;

(b) the activator comprises a solution of an aldehyde-amine condensation product in an inert solvent;

(c) the adhesion promoter is selected from acrylic and methacrylic acid; and

(d) the adhesion promoter is a silane.

6. The adhesive composition according to any of claims 1 to 5, characterized in that the composition, when cured and aged at a temperature of 180°C for 24 hours, shows increased shear strength when compared to the shear strength of the composition when cured at room temperature.

7. The adhesive composition of any of claims 1 to 6 and further characterized by one or more of the following features:

(a) the rubber has a glass transition temperature (Tg) less than about 15°C;

(b) the free radical catalyst system comprises a free radical initiator and a free-radical accelerator, preferably selected from an organic peroxide, hydroperoxide, perester, and peracid, more preferably t-butyl perbenzoate;

(c) the free radical initiator is cumene hydroperoxide;

(d) the free radical accelerator is a sulfimide or a tertiary amine, preferably 3-oxo-2, 3-dihydrobenz[d]-isothiazole-1, 1-dioxide or N,N-dimethyl-paratoluidine;

(e) the activator is an aldehyde-amine condensation product, preferably butyraldehyde-aniline, and wherein the composition optionally contains an inhibitor in the amount of 0.1 to 1% by weight, selected from a hydroquinone, benzoquinone, naphthoquinone, phenanthraquinone, anthraquinone or a substitute compound of any of the foregoing;

(f) the inhibitor is 2,6-di-tert-butyl-4-methylphenol;

(g) wherein the composition optionally contains a chelator in the amount of 0.1 to 1% weight, preferably ethylenediaminetetra acetic acid, or its sodium salt, 2,2-ethylene-bis-nitril methylidyne dipyridine, or a Beta-diketone;

(h) the free radical initiator is present in concentrations from 0.1% to 10% by weight and is selected from (a) $C_1$ and $C_6$ alkyl diones; (b) metal carbonyls of the formula $M_x(CO)_y$ wherein M is a metal atom, x is 1 or 2, and y is an integer determined by the total valence of the metal atoms; and (c) carbonyl compounds of the general formula $R^{14}(CO)R^{15}$ wherein $R^{14}$ is an alkyl, aryl, aralkyl or alkaryl group containing up to about

10 carbon atoms, and $R^{15}$ is $R^{14}$ or hydrogen; and $R^{14}$ and $R^{15}$ taken together with the carbonyl group form an aromatic or heterocyclic ketone containing up to 16 carbon atoms, and wherein the composition optionally contains a cross-linking agent, preferably a dimethacrylate compound.

8. A method of bonding a pair of substrates comprising applying a composition comprising: a first component comprising a solution of polymer in at least one polymerizable monomer in combination with an adhesion promoter and a free radical catalyst system, and a second component comprising an activator, said composition being an improved composition providing increased high temperature resistance in the cured adhesive wherein: said polymer is present at levels of 20% by weight or more of the total composition and is selected from the class of isoprene block copolymer rubbers having a molecular weight in excess of 5,000, and said monomer is an acrylate ester, to at least one of the substrates and joining the two substrates for sufficient time to permit the composition to cure.

**Patentansprüche**

1. Zweikomponenten-Klebstoffzusammensetzung der Art, die aus einer eine Polymerisatlösung in mindestens einem polymerisierbaren Monomeren in Kombination mit einem Haftpromotor und einem radikalischen Katalysatorsystem umfassenden ersten Komponente und einer einen Aktivator umfassenden zweiten Komponente besteht, dadurch gekennzeichnet, daß erhöhte Hochtemperaturfestigkeit im ausgehärteten Klebstoff geschaffen wird, wobei das genannte Polymerisat in einer Menge von mindestens 20 Gewichtsprozent der Gesamtzusammensetzung vorliegt und ein-Isopren-Blockcopolymerisat-Kautschuk mit einem Molekulargewicht über 5 000 ist und das genannte Monomere ein Acrylsäureester ist.

2. Zusammensetzung nach Anspruch 1, dadurch gekennzeichnet, daß der monomere Acrylsäureester ein monofunktionelles Monomer der Formel

$$CH_2{=}\underset{\underset{\displaystyle R^1}{|}}{C}{-}COOR^2$$

ist, wobei $R^1$ Wasserstoff oder ein $C_{1-4}$-Alkylrest ist, $R_2$ einen Alkyl-, Cycloalkyl-, Alkylhydroxy-, Alkylen- oder Tetrahydrofurfurylrest bedeutet, und wobei das genannte monofunktionelle Monomere vorzugsweise Methacrylsäuremethylester, Methacrylsäurecyclohexylester, Methacrylsäuretetrahydrofurfurylester, Methacrylsäureisobornylester, Methacrylsäurehydroxyäthylester oder Methacrylsäurehydroxypropylester umfaßt.

3. Zusammensetzung nach Anspruch 1, dadurch gekennzeichnet, daß der monomere Acrylsäureester ein Gemisch aus mono- und polyfunktionellen Acrylaten umfaßt, wobei das monofunktionelle Acrylat vorzugsweise Methacrylsäuremethylester oder Methacrylsäurecyclohexylester umfaßt und das polyfunktionelle Acrylat vorzugsweise Glykoldimethacrylat umfaßt, und wobei das polyfunktionelle Acrylat in Mengen zwischen etwa 1 und 40 Gewichtsprozent der gesamten Zusammensetzung vorhanden ist.

4. Zusammensetzung nach einem der Ansprüche 1 bis 3, gekennzeichnet durch mindestens eines der folgenden Merkmale:

(a) der elastomere Kautschuk ist ein Blockcopolymerisat von Isopren und Styrol, Isopren und Acrylnitril oder Isopren und Methacrylnitril;

(b) der elastomere Kautschuk ist Polyisopren-Homopolyimerisat;

(c) der elastomere Kautschuk ist ein Copolymerisat von Isopren und Acrylsäure, Methacrylsäure, Maleinsäure-anhydrid, Fumarsäure oder Itaconsäure; und

(d) der elastomere Kautschuk ist ein Copolymerisat von (a) Isopren, (b) Styrol, Acrylnitril oder Methacrylnitril, und (c) Acrylsäure, Methacrylsäure, Maleinsäureanhydrid, Fumarsäure oder Itaconsäure.

5. Klebstoffzusammensetzung nach einem der Ansprüche 1 bis 4, gekennzeichnet durch mindestens eines der folgenden Merkmale:

(a) der Aktivator umfaßt ein Aldehyd-Amin-Kondensationsprodukt, vorzugsweise Butyraldehyd-Anilin;

(b) der Aktivator umfaßt eine Lösung von einem Aldehyd-Amin-Kondensationsprodukt in einem inerten Lösungsmittel;

(c) der Haftpromotor ist Acryl- oder Methacrylsäure; und

(d) der Haftpromoter ist ein Silan.

6. Klebstoffzusammensetzung nach einem der Ansprüche 1 bis 5, dadurch gekennzeichnet, daß die Zusammensetzung nach 24 Stunden Härten und Altern bei einer Temperatur von 180°C erhöhte Scherfestigkeit im Vergleich zur Scherfestigkeit der bei Raumtemperatur gehärteten Zusammensetzung zeigt.

7. Klebstoffzusammensetzung nach einem der Ansprüche 1 bis 6, zusätzlich gekennzeichnet durch mindestens eines der folgenden Merkmale:

(a) der Kautschuk hat eine Glasübergangstemperatur (Tg) unter etwa 15°C;

(b) das radikalische Katalysatorsystem umfaßt einen radikalischen Initiator und einen radiakalischen Beschleuniger, vorzungsweise ein organisches Peroxid, Hydroperoxid, Perester oder Persäure, stärker bevorzugt t-Butylperbenzoat;

(c) der radikalische Initiator ist Cumolhydroperoxid;

(d) der radikalische Beschleuniger ist ein Sulfimid oder ein tertiäres Amin, vorzugsweise 3-Oxo-2,3-dihydrobenz[d]-isothiazol-1,1-dioxid oder N,N-Dimethylparatoluidin;

(e) der Aktivator ist ein Aldehyd-Amin-Kondensationsprodukt, vorzungsweise Butyraldehyd-anilin, wobei die Zusammensetzung gegebenenfalls einen Inhibitor einer Menge von 0,1 bis 1 Gewichtsprozent enthält, ausgewählt aus einem Hydrochinon, Benzochinon, Naphthochinon, Phenanthrachinon, Anthrachinon oder irgend- einer der vorstehenden Verbindungen in substituierter Form;

(f) der Inhibitor est 2,6-Di-tert.-butyl-4-methylphenol;

(g) die Zusammensetzung enthält gegebenenfalls einen Chelatbildner in einer Menge von 0,1 bis 1 Gewichtsprozent, vorzugsweise Äthylendiamintetraessigsäure oder ihr Natriumsalz, 2,2-Äthylen-bis-nitrilmethylidyndipyridin oder ein β-Diketon;

(h) der radikalische Initiator ist in einer Konzentration von 0,1 bis 10 Gewichtsprozent vorhanden und ist ausgewählt aus (a) $C_1$- und $C_6$-Alkyldionen; (b) Metallcarbonylen der Formel $M_x(CO)_y$, wobei M ein Metallatom ist, x 1 oder 2 ist und y eine durch die Gesamtvalenz der Metallatome bestimmte ganze Zahl ist, und (c) Carbonylverbindungen der allgemeinen Formel $R^{14}(CO)R^{15}$, wobei $R^{14}$ einen Alkyl-, Aryl-, Aralkyl- oder Alkarylrest mit bis zu 10 Kohlenstoffatomen bedeutet und $R^{15}$ $R^{14}$ oder Wasserstoff ist, oder daß $R^{14}$ und $R^{15}$ zusammen mit der Carbonylgruppe ein aromatisches oder heterocyclisches Keton mit bis zu 16 Kohlenstoffatomen bilden, und wobei die Zusammensetzung gegebenenfalls ein Vernetzungsmittel, vorzugsweise eine Dimethyacrylatbindung enthält.

8. Verfahren zum Verbindung eines Substratpaares umfassend das Aufbringen einer Zusammensetzung, welche umfaßt: eine erste, eine Polymerisatlösung in mindestens einem polymerisierbaren Monomeren in Kombination mit einem Haftpromotor und einem radikalischen Katalysatorsystem umfassende Komponente und eine zweite, einen Aktivator umfassende Komponente, wobei die genannte Zusammensetzung eine verbesserte, erhöhte Hochtemperaturfestigkeit im gehärteten Klebstoff schaffende Zusammensetzung ist, und wobei das genannte Polymerisat in einer Menge von mindestens 20 Gewichtsprozent der gesamten Zusammensetzung vorhanden ist und ein Isopren-Blockcopolymerisatkautschuk mit einem Molekulargewicht über 5000 ist und das Monomere ein Acrylsäureester ist, auf mindestens eines der Substrate und Verbinden der beiden Substrate für ausreichende Zeit um Aushärtung der Zusammensetzung zu erlauben.

**Revendications**

1. Composition adhésive bipartite du type de celles ayant un premier composant comprenant un polymère en solution dans au moins un monomère polymérisable en combinaison avec un promoteur d'adhésion et un système catalytique à radical libre, et un second composant comprenant un activateur, caractérisée parle fait qu'elle conduit à une augmentation de la résistance aux hautes températures de l'adhésif réticulé à chaud, le polymère étant présent dans la proportion de 20% ou plus du poids total de la composition et étant choisi parmi les élastomères de bloc-copolymères d'isoprène de poids moléculaire supérieur à 5.000 et le monomère étant un ester acrylique.

2. Composition selon la revendication 1, caractérisée par le fait que l'ester acrylique monomère est choisi parmi les monomères monofunctionnels représentés par la formule

$$CH_2=\underset{\underset{R^1}{|}}{C}-COOR^2$$

dans laquelle $R^1$ et H ou un alcoyle en $C_{1-4}$; et $R^2$ est un alcoyle, un cycloalcoyle, un hydroxyalcoyle, un alcoylène ou un tétrahydrofurfuryle, ce monomère monofonctionnel comprenent de préférence du méthacrylate de méthyle, de cyclohexyle, de tétrahydrofurfuryle, d'isobornyle, d'hydroxyéthyle ou d'hydroxypropyle.

3. Composition selon la revendication 1, caractérisée par le fait que l'ester acrylique monomère comprend un mélange d'acrylates mono- et polyfonctionnels, l'acrylate monofonctionnel comprenant de préférence le méthacrylate de méthyle ou de cyclohexyle, et l'acrylate polyfonctionnel comprenant de préférence le diméthacrylate de glycol et étant présent dans une proportion variant environ entre 1% et 40% du poids total de la composition.

4. Composition selon l'une des revendications 1 à 3, caractérisée par un ou plusieurs des faits suivants:

(a) L'élastomère est un bloc-copolymère d'isoprène et de styrène, d'isoprène et d'acrylonitrile ou d'isoprène et de méthacrylonitrile:

(b) l'élastomère est un homopolymère de polyisoprène;

(c) l'élastomère est un copolymère d'isoprène et d'acide acrylique, méthacrylique, d'anhydride maléique, d'acide fumarique ou itaconique;

(d) l'élastomère est un copolymère (a) d'isoprène; (b) de styrène, d'acrylonitrile ou de méthacrylonitrile; et (c) d'acide acrylique, méthacrylique, d'anhydride maléique, d'acide fumarique ou itaconique.

5. Composition adhésive selon l'une des revendications 1 à 4, caractérisée par un ou plusieurs des faits suivants:

(a) l'activateur comprend un produit de condensation d'un aldéhyde et d'une amine, de préférence du butyraldéhyde et de l'aniline;

(b) l'activateur comprend une solution d'un produit de condensation d'un aldéhyde et d'une amine dans un solvant inerte;

(c) le promoteur d'adhésion est choisi parmi les acides acrylique et méthacrylique;

(d) le promoteur d'adhésion est un silane.

6. Composition adhésive selon l'une des revendications 1 à 5, caractérisée par le fait qu'elle présente une augmentation de sa résistance au cisaillement lorsqu'elle est réticulée et vieillie à la température de 180°C pendant 24 heures par comparaison à la résistance au cisaillement qu'elle présente lorsqu'elle est réticulée à température ordinaire.

7. Composition adhésive selon l'une des revendications 1 à 6, caractérisée par un ou plusieurs des faits suivants:

(a) l'élastomère a une température de transition vitreuse (Tg) inférieure à environ 15°C;

(b) le système catalytique à radical libre comprend un initiateur à radical libre et un accélérateur à radical libre, choisi de préférence parmi les peroxydes organiques, les hydroperoxydes, les peresters et les peracides, plus spécialement le perbenzoate de t-butyle;

(c) l'initiateur à radical libre est l'hydroperoxyde de cumène;

(d) l'accélérateur à radical libre est un sulfimide ou une amine tertiaire, de préférence le 1,1-dioxyde de 3-oxo-2,3-dihydrobenz[d]-isothiazole ou la paratoluidine N,N-diméthylée;

(e) l'activateur est un produit de condensation d'un aldéyde et d'une amine, de préférence de butyraldéhyde et de l'aniline, tandis que la composition contient facultativement un inhibiteur dans une proportion variant d'environ 0.1% à 1% en poids et choisi parmi l'hydroquinone, la benzoquinone, la naphthoquinone, la phénanthroquinone, l'anthraquinone ou un dérivé substitué de l'un des composés précédents;

(f) l'inhibiteur est le 2,6-di-tert-butyle-4-méthylphénol;

(g) la composition contient facultativement un chélateur dans une proportion variant de préférence entre environ 0,1% à 1% en poids, ce chélateur étant de préférence de l'acide éthylène-diaminetétracétique ou son sel de sodium, la 2,2-éthylène-bis-nitrile-méthylidyne-dipyridine ou une béta-dicétone;

(h) l'initiateur à radical libre est présent à raison de concentrations variant de 0,1% à 10% en poids et est choisi parmi: (a) les alcoyle-diones en $C_{1-6}$; (b) les métal-carbonyles de formule $M_x(CO)_y$ dans laquelle M est un atome de métal, x est 1 ou 2 et y est un nombre entier déterminé par la valence totale des atomes de métal; (c) les composés carbonylés de formule générale $R^{14}(CO)R^{15}$ dans laquelle $R^{14}$ est un groupe alcoyle, aroyle, aralcoyle ou alcaroyle pouvant contenir jusqu'à environ 10 atomes de carbone et $R^{15}$ et $R^{14}$ ou de l'hydrogène, ou $R^{14}$ et $R^{15}$ pris ensemble avec le groupe carbonyle forment une cétone aromatique ou hétérocyclique contenant jusqu'à 16 atomes de carbone, la composition contenant facultativement un agent de réticulation, de préférence un composé diméthacrylique.

8. Une méthode pour lier une paire de substrats comprenant (a) l'application sur l'un au moins des substrats d'une composition qui comprend: un premier composant comprenant une solution d'un polymère dans au moins un monomère polymérisable en combinaison avec un promoteur d'adhésion et un système catalytique à radical libre, et un second composant comprenant un activateur, cette composition étant une composition améliorée qui présente une augmentation de la résistance à hautes températures de l'adhésif réticulé, le polymère étant présent jusqu'à raison de 20% en poids ou plus de la composition totale, et étant choisi dans la classe des bloc-copolymères d'isoprène élastomères ayant un poids moléculaire de plus de 5.000, et le monomère étant un ester acrylique, et (b) la mise en contact des deux substrats pendant une durée suffisante pour permettre une réticulation de la composition.